(19) Europäisches Patentamt
European Patent Office
Office européen des brevets

(11) EP 3 922 676 B1

(12) **EUROPEAN PATENT SPECIFICATION**

(45) Date of publication and mention of the grant of the patent:
**19.06.2024 Bulletin 2024/25**

(21) Application number: **20752018.0**

(22) Date of filing: **04.02.2020**

(51) International Patent Classification (IPC):
***C08L 69/00*** *(2006.01)* ***G06F 3/041*** *(2006.01)*
***C08J 5/18*** *(2006.01)*

(52) Cooperative Patent Classification (CPC):
(C-Sets available)
**C08L 69/00; C08J 5/18; G06F 3/041;**
C08J 2369/00; C08J 2469/00; C08L 2205/025;
G06F 2203/04103 (Cont.)

(86) International application number:
**PCT/JP2020/004021**

(87) International publication number:
**WO 2020/162419 (13.08.2020 Gazette 2020/33)**

(54) **RESIN COMPOSITION AND FORMED ARTICLE**

HARZZUSAMMENSETZUNG UND FORMARTIKEL

COMPOSITION DE RÉSINE ET ARTICLE FORMÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2019 JP 2019019462**

(43) Date of publication of application:
**15.12.2021 Bulletin 2021/50**

(73) Proprietor: **MITSUBISHI GAS CHEMICAL COMPANY, INC.**
**Chiyoda-ku**
**Tokyo 100-8324 (JP)**

(72) Inventor: **TOMITA, Keisuke**
**Tokyo 125-0051 (JP)**

(74) Representative: **Hoffmann Eitle**
**Patent- und Rechtsanwälte PartmbB**
**Arabellastraße 30**
**81925 München (DE)**

(56) References cited:
**EP-A2- 0 387 577**
**WO-A1-2017/203852**
**JP-A- S6 443 558**
**JP-A- H02 272 060**
**JP-A- H05 179 096**
**JP-A- 2017 210 569**
**JP-A- 2018 154 819**
**JP-A- 2018 154 819**
**JP-A- 2019 156 942**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 922 676 B1

(52) Cooperative Patent Classification (CPC): (Cont.)

C-Sets
**C08L 69/00, C08L 69/00**

## Description

[Technical Field]

The present invention relates to a resin composition comprising polycarbonate resins, and to a formed article using the same.

[Background Art]

Polycarbonate resins have been applied as forming materials for a variety of products.

For example, Patent Literature 1 discloses a resin composition with excellent compatibility comprising an aromatic polycarbonate polymer obtained by carbonate-bonding 2,2-bis-(4-hydroxyphenyl)propane and an aromatic polycarbonate polymer obtained by carbonate-bonding 4,4-dihydroxy-2,2,2-triphenylethane. Patent Literature 2 discloses a polycarbonate composition comprising a polycarbonate resin composition containing polycarbonate resins (1) and (2) of bisphenol A type and bisphenol AP polycarbonate (3), with the mass ratio of polycarbonates (1):(2):(3) being 5-80:10-85:5-70 (where, the total of them is 100 pts.mass).

[Citation List]

[Patent Literature]

[Patent Literature 1] Japanese Patent Laid-Open No. 64-043558
[Patent Literature 2] JP 2018 154819 A

[Summary of Invention]

[Technical Problem]

As described in the above Patent Literature 1, in order to impart heat resistance to a bisphenol A type polycarbonate resin such as an aromatic polycarbonate polymer obtained by carbonate-bonding 2,2-bis-(4-hydroxyphenyl)propane, it is conceivable to compound therewith a bisphenol AP type polycarbonate resin such as an aromatic polycarbonate polymer obtained by carbonate-bonding 4,4-dihydroxy-2,2,2-triphenylethane. However, it was found that blending the bisphenol A type polycarbonate resin and the bisphenol AP type polycarbonate resin may result in inferior processability. Furthermore, it was also found that the resulting resin composition and formed article may become cloudy.

The present invention has an object to solve such problems, and is to provide a resin composition comprising a bisphenol AP type polycarbonate resin and a bisphenol A type polycarbonate resin, the resin composition being excellent in formability, and being also excellent in heat resistance and transparency when made into a formed article, as well as a formed article.

[Solution to Problem]

As a result of investigations for the problems described above, the present inventors have found that it is possible to solve the problems described above by setting the respective viscosity average molecular weights of bisphenol AP type polycarbonate resin and bisphenol A type polycarbonate resin and the ratio of the contents of both resins within particular ranges, and by setting the difference in intrinsic viscosity of both resins within a particular range.

That is, the present invention has the following solutions.

<1> A resin composition comprising:

a bisphenol AP type polycarbonate resin having a viscosity average molecular weight of 18,500 to 23,000; and
a bisphenol A type polycarbonate resin having a viscosity average molecular weight of 25,000 to 35,000, wherein
a ratio ($W_{AP}/W_A$) of a mass ($W_{AP}$) of the bisphenol AP type polycarbonate resin to a mass ($W_A$) of the bisphenol A type polycarbonate resin is 20/80 to 90/10, and
a difference ($|\eta_{AP} - \eta_A|$) between an intrinsic viscosity ($\eta_{AP}$) of the bisphenol AP type polycarbonate resin and an intrinsic viscosity ($\eta_A$) of the bisphenol A type polycarbonate resin is 0.04 to 0.18 dL/g, and

wherein the total content of the bisphenol AP type polycarbonate resin and the bisphenol A type polycarbonate resin is 95% by mass or more based on the total amount of resin components contained in the resin composition, wherein bisphenol AP type polycarbonate has a constituent unit represented by the following formula (A-1):

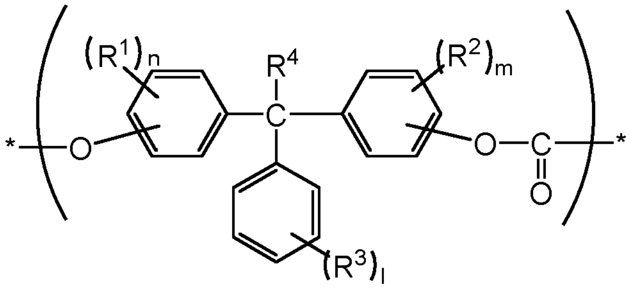

(A-1)

wherein $R^1$ to $R^4$ each independently represent a fluorine atom, a chlorine atom, a bromine atom, an iodine atom, an alkyl group having 1 to 9 carbon atoms, an aryl group having 6 to 12 carbon atoms, an alkoxy group having 1 to 5 carbon atoms, an alkenyl group having 2 to 5 carbon atoms, or an aralkyl group having 7 to 17 carbon atoms, l represents an integer of 0 to 5, m and n each independently represent an integer of 0 to 4 and * represents an end group or a bonding position with another constituent unit,
and wherein bisphenol A type polycarbonate has a constituent unit represented by the following formula (B-1):

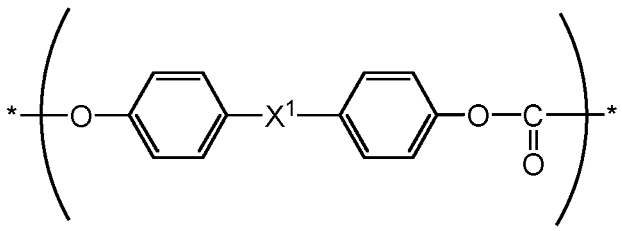

(B-1)

wherein $X^1$ represents the following structure:

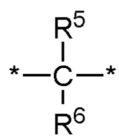

wherein $R^5$ and $R^6$ are each a hydrogen atom or a methyl group,
wherein a specific viscosity $\eta_{sp}$ at each solution concentration C is measured with an Ubbelohde viscometer at 25°C using methylene chloride as the solvent, and the intrinsic viscosity $\eta$ is calculated from the obtained value of the specific viscosity $\eta_{sp}$ and the concentration C according to the following formula:

$$\eta = \lim_{c \to 0} \eta_{sp} / \mathrm{c}$$ ,

and
wherein the viscosity average molecular weight Mv is calculated according to Schnell's viscosity equation:

$$\eta = 1.23 \times 10^{-4} \mathrm{Mv}^{0.83}.$$

<2> The resin composition according to <1>, wherein a difference between the viscosity average molecular weight of the bisphenol AP type polycarbonate resin and the viscosity average molecular weight of the bisphenol A type polycarbonate resin is 5,000 to 15,000.
<3> The resin composition according to any one of <1> to <2>, wherein the resin composition has a melt viscosity

at 300°C of 1,000 to 3,500 Pa·s, as measured with a shear rate of 122 $sec^{-1}$, wherein the melt viscosity is measured by the following method: preparing pellets of the resin composition, drying the obtained pellets at 120°C for 5 hours, using a capillary rheometer, extruding the resin through a nozzle hole of 10 mm in length and 1.0 mm in diameter at 300°C, measuring the shear viscosity at a shear rate of 122 $sec^{-1}$ and using it as the melt viscosity.

<4> The resin composition according to any one of <1> to <3>, wherein the resin composition has a deflection temperature under load of 140°C or higher at a load of 1.8 MPa, as measured in accordance with ISO 75-1.

<5> The resin composition according to any one of <1> to <4>, wherein the bisphenol AP type polycarbonate resin has a glass transition temperature of 172°C or higher,

wherein the glass transition temperature is measured by the following method: using a differential scanning calorimeter; heating about 5 to 10 mg of the sample from 40°C to 280°C at a temperature increase rate of 20°C/min; holding the temperature for 5 minutes and then cooling down to 40°C at a rate of 40°C/min; holding the temperature at 40°C for 10 minutes and then increasing again to 280°C at a rate of 10°C/min; and setting the midpoint glass transition temperature from the DSC data obtained in the second temperature increase as the glass transition temperature.

<6> The resin composition according to any one of <1> to <5>, wherein, when the resin composition is formed into a formed article having a thickness of 4 mm, the formed article has a total light transmittance of 80% or more,

wherein the total light transmittance is measured by the following method: preparing pellets; drying the obtained pellets at 120°C for 5 hours with a hot air circulation drying machine; forming a flat plate specimen of 60 mm × 60 mm × 4 mm in an injection forming machine at a cylinder temperature of 300°C, a metal mold temperature of 80°C, and a forming cycle of 45 seconds; using a haze meter to measure the total light transmittance of the plate specimen obtained by the injection forming with a light source of D65 and a field of view of 10° in accordance with JIS-K-7361 and JIS-K-7136.

<7> The resin composition according to any one of <1> to <6>, wherein, when the resin composition is formed into a formed article having a thickness of 4 mm, the formed article has a haze of 5.0% or less, wherein the haze is measured by forming a flat plate specimen according to the method indicated in claim 7 and using a haze meter to measure the haze of the plate specimen obtained with a light source of D65 and a field of view of 10° in accordance with JIS-K-7361 and JIS-K-7136.

<8> The resin composition according to any one of <1> to <7>, further comprising at least one of an antioxidant and a mold release agent.

<9> A formed article formed from the resin composition according to any one of <1> to <8>.

<10> The formed article according to <9>, wherein the formed article is a film.

<11> The formed article according to <9> or <10>, wherein the formed article is for a touch panel sensor.

[Advantageous Effect of Invention]

The present invention has made it possible to provide a resin composition that is excellent in formability, and is also excellent in heat resistance and transparency when made into a formed article, as well as a formed article using the resin composition.

[Description of Embodiments]

Hereinafter, the contents of the present invention will be described in detail. Note that, in the present specification, the phrase "A to B" is used in the sense that the values listed before and after "to" are included as the lower limit value and the upper limit value, respectively.

Note that, in the present specification, the term "parts by mass" refers to the relative amounts of components, and the term "% by mass" refers to the absolute amounts of components.

The terms "film" and "sheet" both refer to a generally flat formed product that has a thin thickness relative to its length and width. In addition, the term "film" in the present specification may have a single layer or multiple layers.

The resin composition of the present invention is characterized in that the resin composition contains a bisphenol AP type polycarbonate resin having a viscosity average molecular weight of 18,500 to 23,000; and a bisphenol A type polycarbonate resin having a viscosity average molecular weight of 25,000 to 35,000; and, the ratio ($W_{AP}/W_A$) of the mass ($W_{AP}$) of the bisphenol AP type polycarbonate resin to the mass ($W_A$) of the bisphenol A type polycarbonate resin is 20/80 to 90/10, and the difference ($|\eta_{AP} - \eta_A|$) between the intrinsic viscosity ($\eta_{AP}$) of the bisphenol AP type polycarbonate resin and the intrinsic viscosity ($\eta_A$) of the bisphenol A type polycarbonate resin is 0.04 to 0.18 dL/g, as further specified in appended claim 1. When the resin composition is composed as the above, the resin composition is excellent in formability, and is also excellent in heat resistance and transparency when made into a formed article.

The bisphenol AP type polycarbonate resin is excellent in heat resistance. However, the bisphenol AP type polycarbonate resin has a high melt viscosity, and is inferior in processability. In addition, it was found that when the

bisphenol A type polycarbonate resin, which is a general-purpose product, was compounded therewith for improving processability, it resulted in clouding. In the present invention, it was found that, by blending, as a bisphenol AP type polycarbonate resin, the bisphenol AP type polycarbonate resin having a high viscosity average molecular weight in which the difference in intrinsic viscosity with the bisphenol A type polycarbonate resin is within a particular range, it is possible to provide a formed article that is excellent in formability, excellent in heat resistance, and excellent in transparency.

<Bisphenol AP type polycarbonate resin (A)>

The bisphenol AP type polycarbonate resin refers to a resin having a carbonate unit derived from bisphenol AP or its derivative, and it has a constituent unit represented by the following formula (A-1) .

[Formula 1]

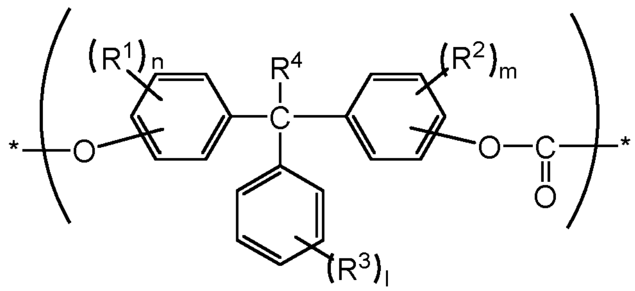

(A-1)

In the formula (A-1), $R^1$ to $R^4$ each independently represent a fluorine atom, a chlorine atom, a bromine atom, an iodine atom, an alkyl group having 1 to 9 (preferably 1 to 3) carbon atoms, an aryl group having 6 to 12 (preferably 6 to 10) carbon atoms, an alkoxy group having 1 to 5 (preferably 1 to 3) carbon atoms, an alkenyl group having 2 to 5 (preferably 2 or 3) carbon atoms, or an aralkyl group having 7 to 17 (preferably 7 to 11) carbon atoms. l represents an integer of 0 to 5. m and n each independently represent an integer of 0 to 4. * represents an end group or a bonding position with another constituent unit.

The constituent unit represented by the formula (A-1) is preferably a constituent unit represented by the following formula (A-2). * in the formula represents an end group or a bonding position with another constituent unit.

[Formula 2]

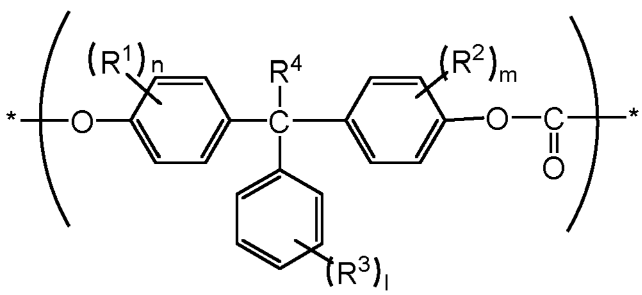

(A-2)

$R^1$, $R^2$, $R^3$, $R^4$, l, m, and n have the same meaning as defined in the formula (A-1).

The constituent unit represented by the formula (A-2) is preferably a constituent unit represented by the following formula (A-3). * in the formula represents an end group or a bonding position with another constituent unit.

[Formula 3]

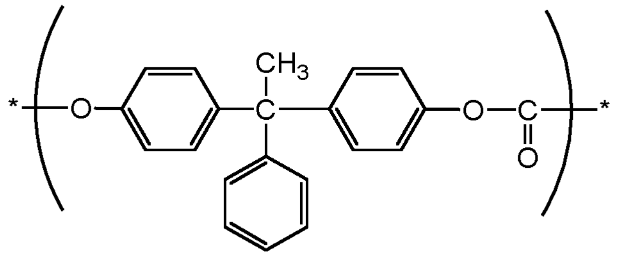

(A-3)

The content of the constituent unit represented by the formula (A-1) in the bisphenol AP type polycarbonate resin is preferably 70% by mol or more, more preferably 80% by mol or more, and still more preferably 90% by mol or more in the entire constituent units excluding the end groups. The upper limit is not particularly limited, and the constituent unit represented by the formula (A-1) may account for 100% by mol. The constituent unit derived from bisphenol AP may be formed of only one kind thereof or with two or more kinds. A particularly preferable example of the bisphenol AP type polycarbonate resin is a resin substantially entirely formed of the constituent unit of the formula (A-1) . The term "substantially entirely" here specifically means 99.0% by mol or more, preferably 99.5% by mol or more, and more preferably 99.9% by mol or more of the entire constituent units excluding the end groups.

The bisphenol AP type polycarbonate resin may have another constituent unit that is different from the carbonate unit derived from bisphenol AP or a derivative thereof. Examples of dihydroxy compounds forming such another constituent unit can be aromatic dihydroxy compounds described in paragraph 0014 of Japanese Patent Laid-Open No. 2018-154819 .

The method for producing the bisphenol AP type polycarbonate resin is not particularly limited, and an arbitrary method can be employed. Examples of such a method may include an interfacial polymerization method, a melt transesterification method, a pyridine method, a ring opening polymerization method for cyclic carbonate compounds, and a solid phase transesterification method for prepolymers.

In the present invention the bisphenol AP type polycarbonate resin has a viscosity average molecular weight of 18,500 to 23,000. The lower limit value is further preferably 19,000 or more, more preferably 19,500 or more, and still more preferably 20,000 or more. The upper limit is preferably 22,000 or less, more preferably 21,000 or less, and still more preferably 20,500 or less. By setting the viscosity average molecular weight to the above, the compatibility with the bisphenol A type polycarbonate resin can be further improved.

Note that, when the resin composition has two or more kinds of bisphenol AP type polycarbonate resins, the measured value of the viscosity average molecular weight of the mixture is treated as the viscosity average molecular weight of the bisphenol AP type polycarbonate resins.

The viscosity average molecular weight is measured by the method described in Examples, which will be mentioned later.

In the present invention, the intrinsic viscosity of the bisphenol AP type polycarbonate resin is preferably 0.2 dL/g or more, more preferably 0.3 dL/g or more, and still more preferably 0.4 dL/g or more. The upper limit is preferably 1.0 dL/g or less, more preferably 0.8 dL/g or less, still more preferably 0.6 dL/g or less, and even more preferably 0.5 dL/g or less.

Note that, when the resin composition has two or more kinds of bisphenol AP type polycarbonate resins, the measured value of the mixture is treated as the intrinsic viscosity of the bisphenol AP type polycarbonate resins.

The intrinsic viscosity is measured by the method described in Examples, which will be mentioned later.

The glass transition temperature (Tg) of the bisphenol AP type polycarbonate resin is preferably 172°C or higher, more preferably 175°C or higher, and still more preferably 180°C or higher. The upper limit is preferably 210°C or lower, more preferably 200°C or lower, and still more preferably 190°C or lower.

The glass transition temperature (Tg) is measured by the method described in Examples, which will be mentioned later.

Note that, when the resin composition has two or more kinds of bisphenol AP type polycarbonate resins, the measured value of the Tg of the mixture is treated as the Tg of the bisphenol AP type polycarbonate resins.

In the present invention, the bisphenol AP type polycarbonate resin has a melt viscosity at 300°C, measured with a shear rate of 122 $sec^{-1}$, of preferably 1,000 Pa·s or more, more preferably 1,500 Pa·s or more, and still more preferably 3,000 Pa·s or more. The upper limit value of the above melt viscosity is preferably 8,000 Pa·s or less, more preferably 7,000 Pa·s or less, and still more preferably 6,500 Pa·s or less.

Note that, when the resin composition has two or more kinds of bisphenol AP type polycarbonate resins, the measured value of the melt viscosity of the mixture is treated as the melt viscosity of the bisphenol AP type polycarbonate resins.

The melt viscosity is measured by the method described in Examples, which will be mentioned later.
The content of the bisphenol AP type polycarbonate resin in the resin composition is preferably 30% by mass or more, more preferably 40% by mass or more, and still more preferably 45% by mass or more. The upper limit value is preferably 90% by mass or less, more preferably 80% by mass or less, and still more preferably 75% by mass or less.
One kind of or two or more kinds of bisphenol AP type polycarbonate resins may be used. When two or more kinds are used, the total amount thereof is within the above range.

<Bisphenol A type polycarbonate resin (B)>

The bisphenol A type polycarbonate resin refers to a resin having a carbonate unit derived from bisphenol A or its derivative, and has a constituent unit represented by the following formula (B-1). * in the formula represents an end group or a bonding position with another constituent unit.

[Formula 4]

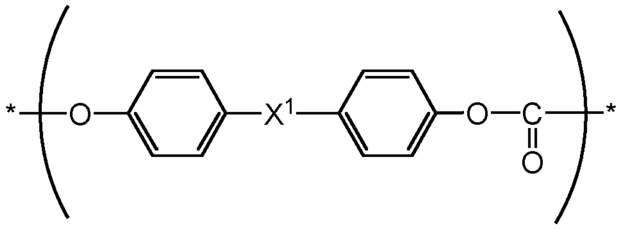

(B-1)

In the formula (B-1), $X^1$ represents the following structure.

[Formula 5]

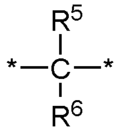

$R^5$ and $R^6$ are each a hydrogen atom or a methyl group. It is preferable that at least one of them should be a methyl group, and it is more preferable that both should be methyl groups.
It is preferable that the formula (B-1) should be represented by the following formula (B-2).

[Formula 6]

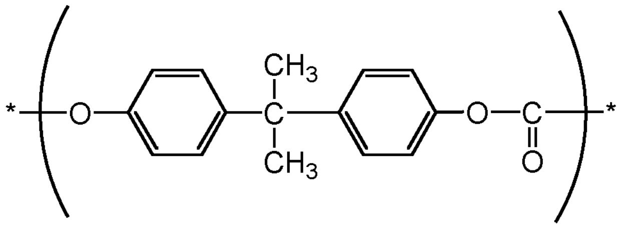

(B-2)

The content of the constituent unit represented by the formula (B-1) in the bisphenol A type polycarbonate resin is preferably 70% by mol or more, more preferably 80% by mol or more, and still more preferably 90% by mol or more in the entire constituent units excluding the end groups. The upper limit is not particularly limited, and the constituent unit represented by the formula (B-1) may account for 100% by mol. The bisphenol A type polycarbonate resin is particularly preferably a resin substantially entirely formed of the constituent unit of the formula (B-1). The term "substantially entirely" here specifically means 99.0% by mol or more, preferably 99.5% by mol or more, and more preferably 99.9% by mol or more of the entire constituent units excluding the end groups.
The bisphenol A type polycarbonate resin may have another constituent unit other than the carbonate unit derived from bisphenol A or a derivative thereof. Examples of dihydroxy compounds forming such another constituent unit can be aromatic dihydroxy compounds described in paragraph 0014 of Japanese Patent Laid-Open No.

2018-154819.

The method for producing the bisphenol A type polycarbonate resin is not particularly limited, and an arbitrary method can be employed. Examples of such a method may include an interfacial polymerization method, a melt transesterification method, a pyridine method, a ring opening polymerization method for cyclic carbonate compounds, and a solid phase transesterification method for prepolymers.

In the present invention the bisphenol A type polycarbonate resin has a viscosity average molecular weight of 25,000 to 35,000. The lower limit value is further preferably 26,000 or more, more preferably 26,500 or more, and still more preferably 26,800 or more. The upper limit is preferably 34,000 or less, more preferably 30,000 or less, and still more preferably 28,000 or less. By setting the viscosity average molecular weight to the above, the compatibility with the bisphenol AP type polycarbonate resin can be further improved.

Note that, when the resin composition has two or more kinds of bisphenol A type polycarbonate resins, the measured value of the viscosity average molecular weight of the mixture is treated as the viscosity average molecular weight of the bisphenol A type polycarbonate resins.

The viscosity average molecular weight is measured by the method described in Examples, which will be mentioned later.

In the present invention, the intrinsic viscosity of the bisphenol A type polycarbonate resin is preferably 0.35 dL/g or more, more preferably 0.4 dL/g or more, still more preferably 0.45 dL/g or more, and even more preferably 0.5 dL/g or more. The upper limit is preferably 1.0 dL/g or less, more preferably 0.8 dL/g or less, and still more preferably 0.6 dL/g or less.

Note that, when the resin composition has two or more kinds of bisphenol A type polycarbonate resins, the measured value of the intrinsic viscosity of the mixture is treated as the intrinsic viscosity of the bisphenol A type polycarbonate resins.

The intrinsic viscosity is measured by the method described in Examples, which will be mentioned later.

The glass transition temperature (Tg) of the bisphenol A type polycarbonate resin is preferably 140°C or higher, more preferably 145°C or higher, and still more preferably 150°C or higher. It is preferable that the upper limit should be 170°C or lower. A higher upper limit is more preferable, but for example, 160°C or lower, or even 155°C or lower, is sufficient to meet the performance requirements.

Note that, when the resin composition has two or more kinds of bisphenol A type polycarbonate resins, the measured value of the Tg of the mixture is treated as the Tg of the bisphenol A type polycarbonate resins.

The glass transition temperature (Tg) is measured by the method described in Examples, which will be mentioned later.

In the present invention, the bisphenol A type polycarbonate resin has a melt viscosity at 300°C, measured with a shear rate of 122 $sec^{-1}$, of preferably 100 Pa·s or more, more preferably 500 Pa·s or more, and still more preferably 800 Pa·s or more. The upper limit value of the above melt viscosity is preferably 2,000 Pa·s or less, more preferably 1,700 Pa·s or less, and still more preferably 1,500 Pa·s or less.

Note that, when the resin composition has two or more kinds of bisphenol A type polycarbonate resins, the measured value of the melt viscosity of the mixture is treated as the melt viscosity of the bisphenol A type polycarbonate resins.

The melt viscosity is measured by the method described in Examples, which will be mentioned later.

The content of the bisphenol A type polycarbonate resin in the resin composition is preferably 10% by mass or more, more preferably 20% by mass or more, and still more preferably 25% by mass or more. The upper limit value is preferably 70% by mass or less, more preferably 60% by mass or less, and still more preferably 55% by mass or less.

One kind of or two or more kinds of bisphenol A type polycarbonate resins may be used. When two or more kinds are used, the total amount thereof is within the above range.

<Blending form of resins>

In the resin composition of the present invention, the ratio ($W_{AP}/W_A$) of the mass ($W_{AP}$) of the bisphenol AP type polycarbonate resin to the mass ($W_A$) of the bisphenol A type polycarbonate resin is 20/80 to 90/10. The lower limit value of the above ratio ($W_{AP}/W_A$) is preferably 30/70 or more, more preferably 40/60 or more, and still more preferably 45/55 or more, and it may be 51/49 or more. The upper limit value of the above ratio ($W_{AP}/W_A$) is preferably 80/20 or less, more preferably 75/25 or less, and still more preferably 72/28 or less.

When the above ratio ($W_{AP}/W_A$) is more than the upper limit value, the heat resistance of the resin composition is reduced. On the other hand, when the above ratio is lower than the lower limit value described above, the melt viscosity of the resin composition is increased and the formability is reduced.

In the resin composition of the present invention, the difference ($|\eta_{AP} - \eta_A|$) between the intrinsic viscosity ($\eta_{AP}$) of the bisphenol AP type polycarbonate resin and the intrinsic viscosity ($\eta_A$) of the bisphenol A type polycarbonate resin is 0.04 to 0.18 dL/g. By setting the difference in intrinsic viscosity of both resins to the above range, it becomes possible

to achieve good transparency and heat resistance at a high level in the formed article while appropriately adjusting the melt viscosity of the resin composition. When the difference in intrinsic viscosity of both resins is outside the above range, the compatibility of those resins is reduced and the transparency of the formed product to be obtained is lost.

From such a viewpoint, the lower limit value of the above difference in intrinsic viscosity ($|\eta_{AP} - \eta_A|$) is preferably 0.06 dL/g or more, more preferably 0.07 dL/g or more, still more preferably 0.08 dL/g or more, and even more preferably 0.09 dL/g or more. The upper limit value is preferably 0.16 dL/g or less, more preferably 0.14 dL/g or less, still more preferably 0.13 dL/g or less, and even more preferably 0.12 dL/g or less.

In addition, the intrinsic viscosity ($\eta_A$) > the intrinsic viscosity ($\eta_{AP}$) is preferable.

In the present invention, the difference ($|Mv_{AP} - Mv_A|$) between the viscosity average molecular weight ($Mv_{AP}$) of the bisphenol AP type polycarbonate resin and the viscosity average molecular weight ($Mv_A$) of the bisphenol A type polycarbonate resin is preferably 5,000 or more, more preferably 5,500 or more, still more preferably 6,000 or more, and even more preferably 6,500 or more. The upper limit value is preferably 15,000 or less, more preferably 13,000 or less, still more preferably 11,000 or less, even more preferably 9,000 or less, yet more preferably 8,000 or less, and further more preferably 7,500 or less.

Note that, when the resin composition has two or more kinds of bisphenol AP type polycarbonate resins and/or bisphenol A type polycarbonate resins, the measured value of the mixture is treated as the viscosity average molecular weight thereof.

In the present invention, the total content of the bisphenol AP type polycarbonate resin and the bisphenol A type polycarbonate resin is 95% by mass or more, preferably 97% by mass or more, and more preferably 99% by mass or more based on the total amount of resin components contained in the resin composition. There is no particular upper limit value, and the entire amount (100% by mass) may be composed of the bisphenol AP type polycarbonate resin and the bisphenol A type polycarbonate resin. By setting the total content to the above range, it becomes possible to achieve both heat resistance and toughness.

<Antioxidant (C)>

It is preferable that the resin composition of the present invention should contain an antioxidant.

Examples of the antioxidant include a phenol antioxidant, an amine antioxidant, a phosphorus-based antioxidant, a thioether antioxidant, and the like. Among the above, the phosphorus-based antioxidant and the phenol antioxidant (more preferably, hindered phenol antioxidant) are preferable in the present invention. The phosphorus-based antioxidant is particularly preferable because of the excellent color phase of the formed article.

A preferable phosphite stabilizer as the phosphorus-based antioxidant is preferably a phosphite compound represented by the following formula (1) or (2).

[Formula 7]

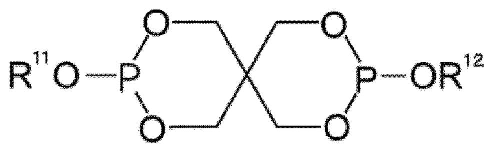

(1)

(In the formula (1), $R^{11}$ and $R^{12}$ each independently represent an alkyl group having 1 to 30 carbon atoms or an aryl group having 6 to 30 carbon atoms.)

[Formula 8]

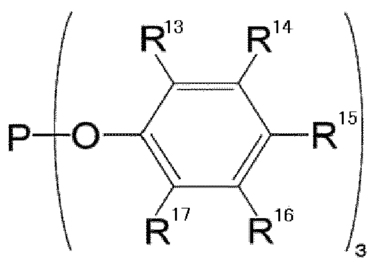

(2)

(In the formula (2), $R^{13}$ to $R^{17}$ each independently represent a hydrogen atom, an aryl group having 6 to 20 carbon atoms, or an alkyl group having 1 to 20 carbon atoms.)

In the above formula (1), it is preferable that the alkyl groups represented by $R^{11}$ and $R^{12}$ should be each independently a linear or branched alkyl group having 1 to 10 carbon atoms. When $R^{11}$ and $R^{12}$ are each an aryl group, it is preferable that they should be each an aryl group represented by any of the following formulas (1-a), (1-b) and (1-c) . * in the formulas represents a bonding position with another site.

[Formula 9]

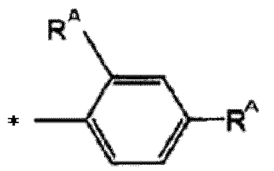

(1−a)

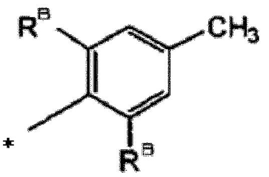

(1−b)

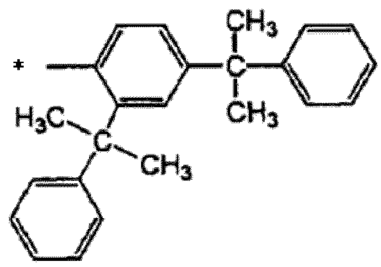

(1−c)

(In the formula (1-a), $R^A$ each independently represent an alkyl group having 1 to 10 carbon atoms. In the formula (1-b), $R^B$ each independently represent an alkyl group having 1 to 10 carbon atoms.)

Hindered phenol antioxidants can be referred to the description in paragraph 0063 of Japanese Patent Laid-Open No. 2018-090677 and paragraph 0076 of Japanese Patent Laid-Open No. 2018-188496.

Antioxidants other than the above can be consulted in the description in paragraphs 0057 to 0061 of Japanese Patent Laid-Open No. 2017-031313.

The content of the antioxidant is preferably 0.01 parts by mass or more, more preferably 0.03 parts by mass or more, and still more preferably 0.05 parts by mass or more based on 100 parts by mass of the polycarbonate resins. In addition, the upper limit value of the content of the antioxidant is preferably 0.4 parts by mass or less, more preferably 0.3 parts by mass or less, still more preferably 0.2 parts by mass or less, and even more preferably 0.15 parts by mass or less based on 100 parts by mass of the polycarbonate resins.

By setting the content of the antioxidant to the lower limit value described above or more, it becomes possible to obtain a formed article with better color phase and heat discoloration resistance. Also, by setting the content of the antioxidant to the upper limit value described above or less, it becomes possible to obtain a formed article with good moist heat stability without worsening heat discoloration resistance.

Moreover, when the phosphorus-based antioxidant and the phenol antioxidant (preferably, hindered phenol antioxidant) are used in combination as the antioxidant, it is preferable that the resin composition should contain the phosphorus-based antioxidant in the range of 0.001 to 0.2 parts by mass and the phenol antioxidant in the range of 0.001 to 0.2 parts by mass based on 100 parts by mass of the polycarbonate resins.

Only one kind of or two or more kinds of antioxidants may be used. When two or more kinds are used, it is preferable that the total amount thereof should be within the above range.

<Mold release agent (D)>

It is preferable that the resin composition of the present invention should contain a mold release agent.

When the resin composition contains a mold release agent, the rolling properties upon rolling a film-like or sheet-like formed article can be improved. For a formed article with a three dimensional shape, the article can be released more easily from a metal mold when the article is formed using it.

The kind of mold release agent is not particularly specified, and examples thereof include an aliphatic carboxylic acid, an ester of an aliphatic carboxylic acid and an alcohol, an aliphatic hydrocarbon compound with a number average molecular weight of 200 to 15,000, a polyether with a number average molecular weight of 100 to 5,000, a polysiloxane-based silicone oil.

Details of mold release agents can be consulted in the description in paragraphs 0035 to 0039 of International Publication No. WO 2015/190162.

The content of the mold release agent is preferably 0.001 parts by mass or more, more preferably 0.005 parts by mass or more, and still more preferably 0.007 parts by mass or more based on 100 parts by mass of the polycarbonate resins. The upper limit value is preferably 0.5 parts by mass or less, more preferably 0.3 parts by mass or less, and still more preferably 0.1 parts by mass or less.

Only one kind of or two or more kinds of mold release agents may be used. When two or more kinds are used, it is preferable that the total amount thereof should be within the above range.

<Other components>

The resin composition of the present invention may contain, in addition to the components described above, a polycarbonate resin other than the bisphenol A type polycarbonate resin and the bisphenol AP type polycarbonate resin, a thermoplastic resin other than the polycarbonate resins, an ultraviolet absorbent, a heat stabilizer, a flame retardant, a flame retardant auxiliary, a colorant, an antistatic agent, a fluorescent brightener, an antifogging agent, a flow improver, a plasticizer, a dispersing agent, an antimicrobial agent, an antiblocking agent, an impact improver, a sliding improver, a color phase improver, an acid trapping agent, and the like. These components each may be used as one kind thereof, or may be used in combination of two or more kinds.

It is preferable that the content of the above components, if contained, should be 0.1 to 5% by mass in total.

As the polycarbonate resin other than the bisphenol A type polycarbonate resin and the bisphenol AP type polycarbonate resin, a bisphenol C polycarbonate resin is exemplified. Alternatively, the resin composition of the present invention can be composed in a manner substantially free of the bisphenol C polycarbonate resin. The term "substantially free of" means that the content of the bisphenol C polycarbonate resin is less than 1% by mass among the resin components contained in the resin composition.

<Physical properties>

It is preferable that the resin composition of the present invention should have a melt viscosity adjusted to an appropriate range to provide good formability. Specifically, the resin composition of the present invention has a melt viscosity at 300°C, measured with a shear rate of 122 $sec^{-1}$, of preferably 3,500 Pa·s or less, more preferably 3,000 Pa·s or less, and still more preferably 2,500 Pa·s or less, and it may be 2,000 Pa·s or less. The lower limit value is preferably 1,000 Pa·s or more and more preferably 1,200 Pa·s or more from the viewpoint of formability, and it may be 1,500 Pa·s or more.

Note that, for the above melt viscosity, the value measured in accordance with the method described in Examples, which will be mentioned later, is employed.

The resin composition of the present invention is preferably transparent when made into a formed article, and more preferably it has high light transmission.

The resin composition of the present invention has a total light transmittance of preferably 80% or more, more preferably 85% or more, and still more preferably 88% or more, when formed into a formed article having a thickness of 4 mm. There is no particular limitation on the upper limit value, and for example, 99% or less, or even 95% or less, is sufficient to meet the performance requirements.

Note that, for the total light transmittance in the present specification, the value measured in accordance with the method described in Examples, which will be mentioned later, is employed.

In addition, it is preferable that the resin composition of the present invention should have no fogging when made into a formed article, and when formed into a formed article having a thickness of 4 mm, the formed article has a haze of preferably 5.0% or less, more preferably 4.0% or less, still more preferably 3.0% or less, and even more preferably 2.5% or less, and it may be 2.0% or less. There is no particular limitation on the lower limit value, and for example, 0.1% or more, or even 0.5% or more, is sufficient to meet the performance requirements.

Note that, for the haze in the present specification, the value measured in accordance with the method described in Examples, which will be mentioned later, is employed.

The resin composition of the present invention has a deflection temperature under load at a load of 1.8 MPa, measured in accordance with ISO 75-1, of preferably 140°C or higher, more preferably 143°C or higher, and still more preferably 145°C or higher. A higher upper limit is more preferable, but for example, 200°C or lower, or even 160°C or lower, is sufficient to meet the performance requirements.

Note that, for the deflection temperature under load in the present specification, the value measured in accordance with the method described in Examples, which will be mentioned later, is employed.

<Method for producing resin composition>

There is no limitation on the method for producing the resin composition of the present invention, and a wide range of known methods for producing resin compositions can be employed. An example thereof is a method in which the polycarbonate resins described above and other components to be compounded therewith if required are premixed using, for example, one of various mixing machines such as a tumbler or a Henschel mixer, and then melt-kneaded using a mixing machine such as a Banbury mixer, a roll, a Brabender, a single screw kneading extruder, a twin screw kneading extruder, or a kneader.

Note that the temperature for melt kneading is not particularly limited, and it is normally in the range of 240 to 360°C.

From the above melt-kneaded resin composition, pellets are obtained by, for example, strand cutting. By subjecting the pellets thus obtained to extrusion forming with a film extruder, for example, a film-like or sheet-like formed article can be produced. Alternatively, by subjecting the pellets to injection forming with an injection forming machine, a formed article with an arbitrary shape can be produced.

<Formed article>

A formed article of the present invention is formed from the resin composition of the present invention. The formed article of the present invention is suitably used for components of electrical and electronic equipment, office automation equipment, mobile information terminals, machine components, home appliances, vehicle components, various containers, lighting equipment, and the like. Among the above, the formed article of the present invention is particularly suitable for use in the housing of electrical and electronic equipment, office automation equipment, information terminal equipment, and home appliances, lighting equipment and vehicle components (particularly, vehicle interior components), surface films for smart phones and touch panels, optical materials, and optical discs. In particular, the formed article of the present invention is suited for touch panel sensors.

As one embodiment of the formed article of the present invention, a film is exemplified, and it is particularly suitable for use as a transparent film for high heat resistance applications. More specifically, it can be used as a film for transparent electrode base materials. Here, the transparent electrode is one in which a transparent electrode layer is arranged on one side or both sides of a transparent base material. A further layer may be present between the transparent base material and the transparent electrode layer. The transparent film of the present invention can be used as the transparent base material in this transparent electrode. It can also be suitably used as a protective film for protecting products in high heat resistance applications.

The thickness of a film formed from the resin composition of the present invention is not particularly limited, and it is preferably 30 μm or more and more preferably 40 μm or more, and it may be 50 μm or more, and even 80 μm or more. The upper limit value is preferably 5 mm or less, more preferably 3 mm or less, and still more preferably 1 mm or less.

[Examples]

Hereinafter, the present invention will be described in further detail with reference to Examples, but the present invention is not to be construed as limited by them.

<Raw materials>

- Bisphenol AP type polycarbonate resin (A):

  (A1) aromatic polycarbonate resin obtained by the interfacial polymerization method using bisphenol AP as the starting raw material (manufactured by Mitsubishi Gas Chemical Company, Inc., FPC-0220, viscosity average molecular weight: 20,200, intrinsic viscosity: 0.44 dL/g, Tg: 184°C, and melt viscosity: 6,400 Pa-s); and
  (A2) aromatic polycarbonate resin obtained by the interfacial polymerization method using bisphenol AP as the starting raw material (manufactured by Mitsubishi Gas Chemical Company, Inc., FPC-0210, viscosity average molecular weight: 11,500, intrinsic viscosity: 0.27 dL/g, Tg: 170°C, and melt viscosity: 1,300 Pa·s).

• Bisphenol A type polycarbonate resin (B):

(B1) aromatic polycarbonate resin obtained by the interfacial polymerization method using bisphenol A as the starting raw material (manufactured by Mitsubishi Engineering-Plastics Corporation, E-2000F, viscosity average molecular weight: 27,000, intrinsic viscosity: 0.54 dL/g, Tg: 151°C, and melt viscosity: 1,050 Pa·s);
(B2) aromatic polycarbonate resin obtained by the interfacial polymerization method using bisphenol A as the starting raw material (manufactured by Mitsubishi Engineering-Plastics Corporation, E-1000F, viscosity average molecular weight: 32,500, intrinsic viscosity: 0.64 dL/g, Tg: 154°C, and melt viscosity: 1,800 Pa-s); and
(B3) aromatic polycarbonate resin obtained by the interfacial polymerization method using bisphenol A as the starting raw material (manufactured by Mitsubishi Engineering-Plastics Corporation, S-3000F, viscosity average molecular weight: 21,000, intrinsic viscosity: 0.43 dL/g, Tg: 148°C, and melt viscosity: 300 Pa·s).

• Antioxidant (C):

(C1) bis(2,6-di-tert-butyl-4-methylphenyl)pentaerythritol diphosphite (phosphorus-based antioxidant, manufactured by ADEKA CORPORATION, Adekastab PEP-36);
(C2) tris(2,4-di-tert-butylphenyl) phosphite (phosphorus-based antioxidant, manufactured by ADEKA CORPORATION, Adekastab 2112); and
(C3) pentaerythritol tetrakis[3-3,5-di-tert-butyl-4-hydroxyphenyl]propionate (phenol antioxidant, manufactured by BASF SE, Irganox 1010).

· Mold release agent (D):
(D1) glycerin monostearate (manufactured by RIKEN VITAMIN CO., LTD., RIKEMAL S-100A).

Examples 1 to 3 and Comparative Examples 1 to 5

Each of the components described above was weighed to achieve the compounding amounts described in Table 1. Then, after mixing them in a tumbler for 15 minutes, the materials were melt-kneaded in a vented twin screw extruder at a cylinder temperature of 320°C, and pellets were obtained by strand cutting.
As the twin screw extruder, "TEX30$\alpha$" manufactured by The Japan Steel Works, LTD. with a screw diameter of 32 mm was used.

<Methods for measuring intrinsic viscosity and viscosity average molecular weight>

The intrinsic viscosity [$\eta$] (unit: dL/g) of each resin was measured using methylene chloride as the solvent. The temperature condition was set at 25°C. The specific viscosity [$\eta_{sp}$] at each solution concentration [C] (g/dL) was measured with an Ubbelohde viscometer. The intrinsic viscosity was calculated from the obtained value of specific viscosity and concentration according to the following formula.

[Expression 1]

$$\eta = \lim_{c \to 0} \eta_{sp} / \mathrm{C}$$

The viscosity average molecular weight [Mv] was calculated according to the Schnell's viscosity equation, that is, $\eta = 1.23 \times 10^{-4}{}_{Mv}{}^{0.83}$.

<Method for measuring glass transition temperature (Tg)>

Using a differential scanning calorimeter (EXSTAR DSC7020, SII NanoTechnology Inc.), about 5 to 10 mg of the sample was heated from 40°C to 280°C at a temperature increase rate of 20°C/min. The temperature was held for 5 minutes and then cooled down to 40°C at a rate of 40°C/min. The temperature was held at 40°C for 10 minutes and then increased again to 280°C at a rate of 10°C/min. From the DSC data obtained in the second temperature increase, the midpoint glass transition temperature was set as the glass transition temperature (Tg).

<Measurement of melt viscosity>

The obtained pellets were dried at 120°C for 5 hours. Then, using a capillary rheometer, the resin was extruded through a nozzle hole (orifice) of 10 mm in length and 1.0 mm in diameter at 300°C. At that time, the shear viscosity (unit: Pa·s) at a shear rate of 122 $sec^{-1}$ was measured and used as the melt viscosity.
As the capillary rheometer, "Capilograph 1B" (trade name) manufactured by Toyo Seiki Seisaku-sho, Ltd. was used.

<Measurement of total light transmittance and haze>

The obtained pellets were dried at 120°C for 5 hours with a hot air circulation drying machine. Then, using an injection forming machine, a flat plate specimen (60 mm × 60 mm × 4 mm) was formed under conditions with a cylinder temperature of 300°C, a metal mold temperature of 80°C, and a forming cycle of 45 seconds.
As the injection forming machine, "J110AD" (trade name) manufactured by The Japan Steel Works, LTD. was used.
Using a haze meter, the total light transmittance (%) and the haze (%) of the plate specimen obtained by the injection forming were measured under conditions with a light source of D65 and a field of view of 10° in accordance with JIS-K-7361 and JIS-K-7136, respectively.
As the haze meter, "HM-150" (trade name) manufactured by MURAKAMI COLOR RESEARCH LABORATORY CO., LTD. was used.

<Measurement of deflection temperature under load (HDT)>

The obtained pellets were dried at 120°C for 5 hours with a hot air circulation drying machine.
Then, using an injection forming machine, an ISO multipurpose test specimen (type A1, thickness of 4 mm) in accordance with JIS-K 7139 was formed under conditions with a cylinder temperature of 300°C, a metal mold temperature of 80°C, and a forming cycle of 45 seconds.
As the injection forming machine, "J110AD" (trade name) manufactured by The Japan Steel Works, LTD. was used.
Using the above ISO multipurpose test specimen, the deflection temperature under load (unit: °C) was measured under conditions with a load of 1.80 MPa (method A) using an HDT testing apparatus in accordance with ISO 75-1.
As the HDT (deflection temperature under load) testing apparatus, "3M-2" (trade name) manufactured by Toyo Seiki Seisakusho, Ltd. was used.

<Testing method for flex resistance>

The obtained pellets were melted at a cylinder temperature of 300°C with a vented twin screw film extruder ("TEM26DS" manufactured by Toshiba Machine Co., Ltd.) equipped with a T-die lip with a screw diameter of 28 mm, and extruded with a rigid mirror roll at 130°C to fabricate a film with a thickness of 50 μm.
The obtained film was cut out to a size of 75 × 25 mm, and a flex resistance test was carried out in accordance with JIS C 5016 using an FPC flexing tester with the radius of curvature of the flexing surface being 3 mm. In the flex resistance test this time, the presence or absence of occurrence of cracks in the test sample after 200,000 cycles of flexing was evaluated and judged visually using the following criteria.

A: No cracks occurred
B: Cracks occurred

As the FPC flexing tester, "No. 306 FPC flexing tester" (trade name) manufactured by YASUDA SEIKI SEISAKUSHO, LTD. was used.

[Table 1]

| | | Examples | | |
|---|---|---|---|---|
| Component | Abbreviation | 1 | 2 | 3 |
| Bisphenol AP type polycarbonate resin (A) | A1 | 50 | 60 | 70 |
| | A2 | | | |

(continued)

| | | Examples | | |
|---|---|---|---|---|
| Component | Abbreviation | 1 | 2 | 3 |
| Bisphenol A type polycarbonate resin (B) | B1 | 50 | 40 | 30 |
| | B2 | | | |
| | B3 | | | |
| Antioxidant (C) | C1 | 0.03 | 0.03 | 0.03 |
| | C2 | 0.01 | 0.01 | 0.01 |
| | C3 | 0.05 | 0.05 | 0.05 |
| Mold release agent (D) | D1 | 0.01 | 0.01 | 0.01 |
| Difference in intrinsic viscosity (dL/g) | | 0.1 | 0.1 | 0.1 |
| Melt viscosity (Pa×s) | | 1710 | 1900 | 2220 |
| Total light transmittance (%) | | 89.2 | 89.1 | 89.5 |
| Haze (%) | | 1.5 | 1.3 | 2.1 |
| HDT (°C) | | 145.2 | 148.7 | 152.6 |
| Flex resistance test (200,000 cycles) | | A | A | A |

| | | Comparative Examples | | | | |
|---|---|---|---|---|---|---|
| Component | Abbreviation | 1 | 2 | 3 | 4 | 5 |
| Bisphenol AP type polycarbonate resin (A) | A1 | 70 | | 100 | | 70 |
| | A2 | | | | 50 | |
| Bisphenol A type polycarbonate resin (B) | B1 | | 100 | | 50 | |
| | B2 | | | | | 30 |
| | B3 | 30 | | | | |
| Antioxidant (C) | C1 | 0.03 | 0.03 | 0.03 | 0.03 | 0.03 |
| | C2 | 0.01 | 0.01 | 0.01 | 0.01 | 0.01 |
| | C3 | 0.05 | 0.05 | 0.05 | 0.05 | 0.05 |
| Mold release agent (D) | D1 | 0.01 | 0.01 | 0.01 | 0.01 | 0.01 |
| Difference in intrinsic viscosity (dL/g) | | 0.01 | - | - | 0.273 | 0.2 |
| Melt viscosity (Paxs) | | 2050 | 1000 | 6250 | 660 | 4450 |
| Total light transmittance (%) | | 78 | 89.3 | Unformable | 88.1 | Unformable |
| Haze (%) | | 21.4 | 1.3 | Unformable | 1.9 | Unformable |
| HDT (°C) | | 149.1 | 130.9 | Unformable | 133.7 | Unformable |
| Flex resistance test (200,000 cycles) | | B | A | A | B | A |

(Notes on the table)
Contents: parts by mass
Difference in intrinsic viscosity: the absolute value of the difference (|hAP - hA|) between the intrinsic viscosity (hAP) of the bisphenol AP polycarbonate and the intrinsic viscosity (hA) of the bisphenol A polycarbonate
Unformable: indicating that the melt viscosity was too high to form an injection test specimen
HDT: deflection temperature under load

As shown at Table 1, by using the bisphenol AP type polycarbonate resin and the bisphenol A type polycarbonate resin with certain viscosity average molecular weights, with a certain content ratio, and with a certain difference in intrinsic viscosity, the obtained formed articles have excellent transparency, high total light transmittance, and small haze. Furthermore, the formed articles have high formability, a high deflection temperature, and excellent heat resistance (Examples 1 to 3).

In contrast, when the bisphenol A type polycarbonate resin had a small viscosity average molecular weight and the difference in intrinsic viscosity with the bisphenol AP type polycarbonate resin was small, the total light transmittance was low and the haze was high (Comparative Example 1).

In addition, when no bisphenol AP type polycarbonate resin was included, the deflection temperature under load was low and the heat resistance was inferior (Comparative Example 2).

On the other hand, when no bisphenol A type polycarbonate resin was included, the resin composition had a high melt viscosity and could not be formed (Comparative Example 3).

Also, when the bisphenol AP type polycarbonate resin had a small viscosity average molecular weight and the difference in intrinsic viscosity with the bisphenol A type polycarbonate resin was large, the heat resistance of the resulting resin composition was inferior (Comparative Example 4).

Furthermore, when the bisphenol A type polycarbonate resin had a large viscosity average molecular weight and the difference in intrinsic viscosity with the bisphenol AP type polycarbonate resin was large, the resin composition had a high melt viscosity and could not be formed (Comparative Example 5).

## Claims

1. A resin composition comprising:

a bisphenol AP type polycarbonate resin having a viscosity average molecular weight of 18,500 to 23,000; and a bisphenol A type polycarbonate resin having a viscosity average molecular weight of 25,000 to 35,000, wherein a ratio $W_{AP}/W_A$ of a mass $W_{AP}$ of the bisphenol AP type polycarbonate resin to a mass $W_A$ of the bisphenol A type polycarbonate resin is 20/80 to 90/10,

a difference $|\eta_{AP} - \eta_A|$ between an intrinsic viscosity $\eta_{AP}$ of the bisphenol AP type polycarbonate resin and an intrinsic viscosity $\eta_A$ of the bisphenol A type polycarbonate resin is 0.04 to 0.18 dL/g, and

wherein the total content of the bisphenol AP type polycarbonate resin and the bisphenol A type polycarbonate resin is 95% by mass or more based on the total amount of resin components contained in the resin composition, wherein bisphenol AP type polycarbonate has a constituent unit represented by the following formula (A-1):

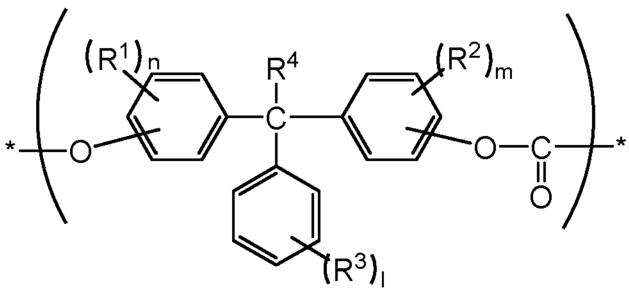

(A-1)

wherein $R^1$ to $R^4$ each independently represent a fluorine atom, a chlorine atom, a bromine atom, an iodine atom, an alkyl group having 1 to 9 carbon atoms, an aryl group having 6 to 12 carbon atoms, an alkoxy group having 1 to 5 carbon atoms, an alkenyl group having 2 to 5 carbon atoms, or an aralkyl group having 7 to 17 carbon atoms, l represents an integer of 0 to 5, m and n each independently represent an integer of 0 to 4 and * represents an end group or a bonding position with another constituent unit,

and wherein bisphenol A type polycarbonate has a constituent unit represented by the following formula (B-1):

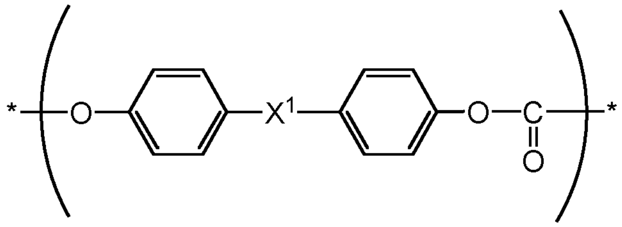

(B-1)

wherein $X^1$ represents the following structure:

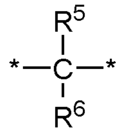

wherein $R^5$ and $R^6$ are each a hydrogen atom or a methyl group,
wherein a specific viscosity $\eta_{sp}$ at each solution concentration C is measured with an Ubbelohde viscometer at 25°C using methylene chloride as the solvent, and the intrinsic viscosity $\eta$ is calculated from the obtained value of the specific viscosity $\eta_{sp}$ and the concentration C according to the following formula:

$$\eta = \lim_{c \to 0} \eta_{sp} / c$$ ,

and
wherein the viscosity average molecular weight Mv is calculated according to Schnell's viscosity equation:

$$\eta = 1.23 \times 10^{-4} Mv^{0.83}.$$

**2.** The resin composition according to claim 1, wherein a difference between the viscosity average molecular weight of the bisphenol AP type polycarbonate resin and the viscosity average molecular weight of the bisphenol A type polycarbonate resin is 5,000 to 15,000.

**3.** The resin composition according to any one of claims 1 to 2, wherein the resin composition has a melt viscosity at 300°C of 1,000 to 3,500 Pa·s, as measured with a shear rate of 122 $sec^{-1}$, wherein the melt viscosity is measured by the following method: preparing pellets of the resin composition, drying the obtained pellets at 120°C for 5 hours, using a capillary rheometer, extruding the resin through a nozzle hole of 10 mm in length and 1.0 mm in diameter at 300°C, measuring the shear viscosity at a shear rate of 122 $sec^{-1}$ and using it as the melt viscosity.

**4.** The resin composition according to any one of claims 1 to 3, wherein the resin composition has a deflection temperature under load of 140°C or higher at a load of 1.8 MPa, as measured in accordance with ISO 75-1.

**5.** The resin composition according to any one of claims 1 to 4, wherein the bisphenol AP type polycarbonate resin has a glass transition temperature of 172°C or higher,
wherein the glass transition temperature is measured by the following method: using a differential scanning calorimeter; heating about 5 to 10 mg of the sample from 40°C to 280°C at a temperature increase rate of 20°C/min; holding the temperature for 5 minutes and then cooling down to 40°C at a rate of 40°C/min; holding the temperature at 40°C for 10 minutes and then increasing again to 280°C at a rate of 10°C/min; and setting the midpoint glass transition temperature from the DSC data obtained in the second temperature increase as the glass transition temperature.

**6.** The resin composition according to any one of claims 1 to 5, wherein, when the resin composition is formed into a formed article having a thickness of 4 mm, the formed article has a total light transmittance of 80% or more,
wherein the total light transmittance is measured by the following method: preparing pellets; drying the obtained pellets at 120°C for 5 hours with a hot air circulation drying machine; forming a flat plate specimen of 60 mm × 60

mm × 4 mm in an injection forming machine at a cylinder temperature of 300°C, a metal mold temperature of 80°C, and a forming cycle of 45 seconds; using a haze meter to measure the total light transmittance of the plate specimen obtained by the injection forming with a light source of D65 and a field of view of 10° in accordance with JIS-K-7361 and JIS-K-7136.

**7.** The resin composition according to any one of claims 1 to 6, wherein, when the resin composition is formed into a formed article having a thickness of 4 mm, the formed article has a haze of 5.0% or less, wherein the haze is measured by forming a flat plate specimen according to the method indicated in claim 7 and using a haze meter to measure the haze of the plate specimen obtained with a light source of D65 and a field of view of 10° in accordance with JIS-K-7361 and JIS-K-7136.

**8.** The resin composition according to any one of claims 1 to 7, further comprising at least one of an antioxidant and a mold release agent.

**9.** A formed article formed from the resin composition according to any one of claims 1 to 8.

**10.** The formed article according to claim 9, wherein the formed article is a film.

**11.** The formed article according to claim 9 or 10, wherein the formed article is for a touch panel sensor.

**Patentansprüche**

**1.** Harzzusammensetzung, umfassend:

ein Polycarbonatharz vom Bisphenol AP-Typ mit einem viskositätsmittleren Molekulargewicht von 18.500 bis 23.000 und
ein Polycarbonatharz vom Bisphenol A-Typ mit einem viskositätsmittleren Molekulargewicht von 25.000 bis 35.000, wobei
ein Verhältnis $W_{AP}/W_A$ einer Masse $W_{AP}$ des Polycarbonatharzes vom Bisphenol AP-Typ zu einer Masse $W_A$ des Polycarbonatharzes vom Bisphenol A-Typ 20/80 bis 90/10 beträgt,
eine Differenz $|\eta_{AP} - \eta_A|$ zwischen einer Grenzviskosität $\eta_{AP}$ des Polycarbonatharzes vom Bisphenol AP-Typ und einer Grenzviskosität $\eta_A$ des Polycarbonatharzes vom Bisphenol A-Typ 0,04 bis 0,18 dL/g beträgt und
wobei der Gesamtgehalt des Polycarbonatharzes vom Bisphenol A-Typ und des Polycarbonatharzes vom Bisphenol A-Typ 95 Masse-% oder mehr, bezogen auf die Gesamtmenge der in der Harzzusammensetzung enthaltenen Harzkomponenten, beträgt,
wobei das Polycarbonat vom Bisphenol AP-Typ eine durch die folgende Formel (A-1) dargestellte konstitutionelle Einheit aufweist:

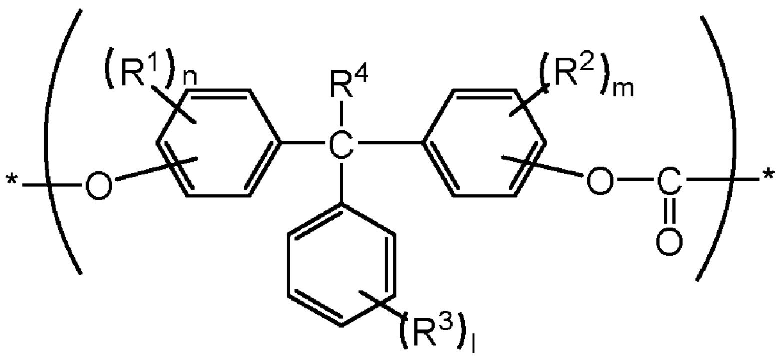
(A-1)

wobei $R^1$ bis $R^4$ jeweils unabhängig ein Fluoratom, ein Chloratom, ein Bromatom, ein Iodatom, eine Alkylgruppe mit 1 bis 9 Kohlenstoffatomen, eine Arylgruppe mit 6 bis 12 Kohlenstoffatomen, eine Alkoxygruppe mit 1 bis 5 Kohlenstoffatomen, eine Alkenylgruppe mit 2 bis 5 Kohlenstoffatomen oder eine Aralkylgruppe mit 7 bis 17 Kohlenstoffatomen darstellen, l eine ganze Zahl von 0 bis 5 darstellt, m und n jeweils unabhängig eine ganze Zahl von 0 bis 4 darstellen und * eine Endgruppe oder eine Bindungsposition mit einer anderen konstitutionellen Einheit darstellt,

und wobei das Polycarbonat vom Bisphenol A-Typ eine durch die folgende Formel (B-1) dargestellte konstitutionelle Einheit aufweist:

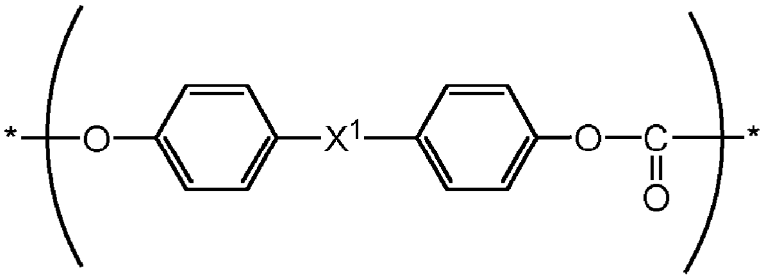

(B-1)

worin $X^1$ die folgende Struktur darstellt:

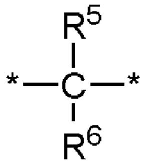

worin $R^5$ und $R^6$ jeweils ein Wasserstoffatom oder eine Methylgruppe sind,
wobei eine spezifische Viskosität $\eta_{sp}$ bei einer jeweiligen Lösungskonzentration C mit einem Ubbelohde-Viskosimeter bei 25°C unter Verwendung von Methylenchlorid als das Lösungsmittel gemessen wird und die Grenzviskosität $\eta$ aus dem erhaltenen Wert der spezifischen Viskosität $\eta_{sp}$ und der Konzentration C gemäß der folgenden Formel berechnet wird:

$$\eta = \lim_{c \to 0} \eta_{sp} / c \quad ,$$

und
wobei das viskositätsmittlere Molekulargewicht Mv gemäß der Viskositätsgleichung von Schnell berechnet wird:

$$\eta = 1{,}23 \times 10^{-4}\ Mv^{0{,}83}.$$

2. Harzzusammensetzung gemäß Anspruch 1, wobei eine Differenz zwischen dem viskositätsmittleren Molekulargewicht des Polycarbonatharzes vom Bisphenol AP-Typ und dem viskositätsmittleren Molekulargewicht des Polycarbonatharzes vom Bisphenol A-Typ 5.000 bis 15.000 beträgt.

3. Harzzusammensetzung gemäß einem der Ansprüche 1 bis 2, wobei die Harzzusammensetzung eine Schmelzviskosität bei 300°C von 1.000 bis 3.500 Pa·s, gemessen bei einer Schergeschwindigkeit von 122 $sek^{-1}$, aufweist, wobei die Schmelzviskosität durch das folgende Verfahren gemessen wird: Herstellen von Pellets aus der Harzzusammensetzung, Trocknen der erhaltenen Pellets bei 120°C für 5 Stunden, Verwenden eines Kapillarrheometers, Extrudieren des Harzes durch eine Düsenöffnung von 10 mm Länge und 1,0 mm Durchmesser bei 300°C, Messen der Scherviskosität bei einer Schergeschwindigkeit von 122 $sek^{-1}$ und deren Verwendung als die Schmelzviskosität.

4. Harzzusammensetzung gemäß einem der Ansprüche 1 bis 3, wobei die Harzzusammensetzung eine Formbeständigkeitstemperatur unter Last von 140°C oder höher bei einer Last von 1,8 MPa, gemessen gemäß ISO 75-1, aufweist.

5. Harzzusammensetzung gemäß einem der Ansprüche 1 bis 4, wobei das Polycarbonatharz vom Bisphenol AP-Typ eine Glasübergangstemperatur von 172°C oder höher aufweist,
wobei die Glasübergangstemperatur durch das folgende Verfahren gemessen wird: Verwenden eines Differential-Scanning-Kalorimeters, Erwärmen von etwa 5 bis 10 mg der Probe von 40°C auf 280°C bei einer Temperaturanstiegsgeschwindigkeit von 20°C/min, Halten der Temperatur für 5 Minuten und dann Abkühlen auf 40°C bei einer Geschwindigkeit von 40°C/min, Halten der Temperatur bei 40°C für 10 Minuten und dann erneute Erhöhung auf 280°C bei einer Geschwindigkeit von 10°C/min und Festlegen der Mittelpunktglasübergangstemperatur aus den DSC-Daten, die beim zweiten Temperaturanstieg erhalten wurden, als die Glasübergangstemperatur.

**6.** Harzzusammensetzung gemäß einem der Ansprüche 1 bis 5, wobei, wenn die Harzzusammensetzung zu einem Formteil mit einer Dicke von 4 mm gebildet wird, das Formteil einen Gesamtlichttransmissionsgrad von 80 % oder mehr aufweist,
wobei der Gesamtlichttransmissionspart durch das folgende Verfahren gemessen wird: Herstellen von Pellets, Trocknen der erhaltene Pellets bei 120°C für 5 Stunden mit einer Heißluftumwälzungstrockenmaschine, Bilden eines flachen Plattenprobenkörpers von 60 mm × 60 mm × 4 mm in einer Spritzformmaschine bei einer Zylindertemperatur von 300°C, einer Metallformtemperatur von 80°C und einem Formzyklus von 45 Sekunden, Verwenden eines Trübungsmessgeräts zur Messung des Gesamtlichttransmissionsgrads des durch das Spritzformen erhaltenen Plattenprüfkörpers mit einer D65-Lichtquelle und einem Sichtfeld vom 10° gemäß JIS-K-7361 und JIS-K-7136.

**7.** Harzzusammensetzung gemäß einem der Ansprüche 1 bis 6, wobei, wenn die Harzzusammensetzung zu einem Formteil mit einer Dicke von 4 mm geformt wird, das Formteil eine Trübung von 5,0 % oder weniger aufweist, wobei die Trübung durch Bilden eines flachen Plattenprobenkörpers gemäß dem in Anspruch 7 angegebenen Verfahren unter Verwendung eines Trübungsmessgeräts zur Messung der Trübung des erhaltenen Plattenprobenkörpers mit einer D65-Lichtquelle und einem Sichtfeld von 10° gemäß JIS-K-7361 und JIS-K-7136 gemessen wird.

**8.** Harzzusammensetzung gemäß einem der Ansprüche 1 bis 7, ferner umfassend mindestens eines von einem Antioxidans und einem Formtrennmittel.

**9.** Formteil, gebildet aus der Harzzusammensetzung gemäß einem der Ansprüche 1 bis 8.

**10.** Formteil gemäß Anspruch 9, wobei das Formteil eine Folie ist.

**11.** Formteil gemäß Anspruch 9 oder 10, wobei das Formteil für einen Touchpanel-Sensor bestimmt ist.

**Revendications**

**1.** Composition de résine comprenant :

une résine de polycarbonate de type bisphénol AP présentant un poids moléculaire moyen en viscosité allant de 18 500 à 23 000 ; et
une résine de polycarbonate de type bisphénol A présentant un poids moléculaire moyen en viscosité allant de 25 000 à 35 000, dans laquelle
un rapport $W_{AP}/W_A$ d'une masse $W_{AP}$ de la résine de polycarbonate de type bisphénol AP sur une masse $W_A$ de la résine de polycarbonate de type bisphénol A est de 20/80 à 90/10,
une différence $|\eta_{AP} - \eta_A|$ entre une viscosité intrinsèque $\eta_{AP}$ de la résine de polycarbonate de type bisphénol AP et une viscosité intrinsèque $\eta_A$ de la résine polycarbonate de type bisphénol A est de 0,04 à 0,18 dl/g, et
dans laquelle la teneur totale en résine de polycarbonate de type bisphénol AP et en résine de polycarbonate de type bisphénol A est de 95 % en masse ou plus sur la base de la quantité totale des composants de résine contenus dans la composition de résine,
dans laquelle le polycarbonate de type bisphénol AP présente un motif constitutif représenté par la formule (A-1) suivante :

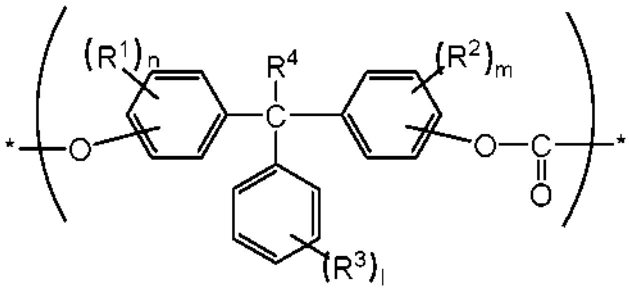

(A-1)

dans laquelle $R^1$ à $R^4$ représentent chacun indépendamment un atome de fluor, un atome de chlore, un atome de brome, un atome d'iode, un groupe alkyle ayant 1 à 9 atomes de carbone, un groupe aryle présentant 6 à 12 atomes de carbone, un groupe alcoxy ayant 1 à 5 atomes de carbone, un groupe alcényle ayant 2 à 5 atomes de carbone, ou un groupe aralkyle ayant 7 à 17 atomes de carbone, l représente un nombre entier de 0 à 5, m et n représentent chacun indépendamment un nombre entier de 0 à 4 et * représente un groupe terminal ou une position de liaison avec un autre motif constitutif,

et dans laquelle le polycarbonate de type bisphénol A présente un motif constitutif représenté par la formule (B-1) suivante :

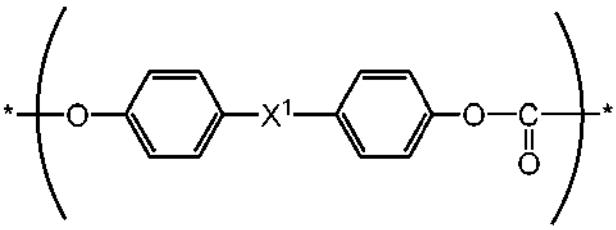

(B-1)

dans laquelle $X^1$ représente la structure suivante :

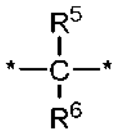

dans laquelle $R^5$ et $R^6$ sont chacun un atome d'hydrogène ou un groupe méthyle,

dans laquelle une viscosité spécifique $\eta_{sp}$ à chaque concentration C de solution est mesurée avec un viscosimètre Ubbelohde à 25 °C en utilisant du chlorure de méthylène comme solvant, et la viscosité intrinsèque $\eta$ est calculée à partir de la valeur obtenue de la viscosité spécifique $\eta_{sp}$ et la concentration C selon la formule suivante :

$$\eta = \lim_{c \to 0} \eta_{sp} / \mathrm{c} ,$$

et

dans laquelle le poids moléculaire moyen en viscosité Mv est calculé selon l'équation de viscosité de Schnell :

$$\eta = 1{,}23 \times 10^{-4} Mv^{0{,}83}.$$

2. Composition de résine selon la revendication 1, dans laquelle une différence entre le poids moléculaire moyen en viscosité de la résine de polycarbonate de type bisphénol AP et le poids moléculaire moyen en viscosité de la résine de polycarbonate de type bisphénol A est de 5 000 à 15 000.

3. Composition de résine selon l'une quelconque des revendications 1 à 2, dans laquelle la composition de résine

présente une viscosité à l'état fondu à 300 °C de 1 000 à 3 500 Pa.s, telle que mesurée avec un taux de cisaillement de 122 $sec^{-1}$, dans laquelle la viscosité à l'état fondu est mesurée par le procédé suivant : la préparation de granulés de la composition de résine, le séchage des granulés obtenus à 120 °C pendant 5 heures, au moyen d'un rhéomètre capillaire, l'extrusion de la résine à travers un trou de buse de 10 mm de longueur et de 1,0 mm de diamètre à 300 °C, la mesure de la viscosité de cisaillement à un taux de cisaillement de 122 $sec^{-1}$ et son utilisation comme viscosité à l'état fondu.

**4.** Composition de résine selon l'une quelconque des revendications 1 à 3, dans laquelle la composition de résine présente une température de fléchissement sous charge de 140 °C ou plus à une charge de 1,8 MPa, telle que mesurée conformément à l'ISO 75-1.

**5.** Composition de résine selon l'une quelconque des revendications 1 à 4, dans laquelle la résine de polycarbonate de type bisphénol AP présente une température de transition vitreuse de 172 °C ou plus,
dans laquelle la température de transition vitreuse est mesurée par le procédé suivant : au moyen d'un calorimètre à compensation de puissance ; le chauffage d'environ 5 à 10 mg de l'échantillon de 40 °C à 280 °C à une vitesse d'augmentation de température de 20 °C/min ; le maintien de la température pendant 5 minutes, puis un refroidissement jusqu'à 40 °C à une vitesse de 40 °C/min ; le maintien de la température à 40 °C pendant 10 minutes, puis une nouvelle augmentation jusqu'à 280 °C à une vitesse de 10 °C/min ; et la détermination que la température de transition vitreuse médiane à partir des données DSC obtenues lors de la seconde augmentation de température est la température de transition vitreuse.

**6.** Composition de résine selon l'une quelconque des revendications 1 à 5, dans laquelle, lorsque la composition de résine est formée en un article mis en forme ayant une épaisseur de 4 mm, l'article mis en forme présente un facteur total de transmission lumineuse de 80 % ou plus,
dans laquelle le facteur total de transmission lumineuse est mesuré par le procédé suivant : la préparation de granulés ; le séchage des granulés obtenus à 120 °C pendant 5 heures avec une machine de séchage à circulation d'air chaud ; la formation d'une éprouvette en forme de plaque plate de 60 mm × 60 mm × 4 mm dans une machine de formage par injection à une température de cylindre de 300 °C, une température de moule métallique de 80 °C, et un cycle de formage de 45 secondes ; l'utilisation d'un dispositif de mesure de turbidité pour mesurer le facteur total de transmission lumineuse de l'éprouvette en forme de plaque obtenue par le formage par injection avec une source de lumière D65 et un champ de vision de 10° conformément aux JIS-K-7361 et JIS-K-7136.

**7.** Composition de résine selon l'une quelconque des revendications 1 à 6, dans laquelle, lorsque la composition de résine est formée en un article mis en forme présentant une épaisseur de 4 mm, l'article mis en forme présente une turbidité de 5,0 % ou moins, dans laquelle la turbidité est mesurée en formant une éprouvette en forme de plaque plate selon le procédé indiqué dans la revendication 7 et en utilisant un dispositif de mesure de turbidité pour mesurer la turbidité de l'éprouvette en forme de plaque obtenue avec une source de lumière D65 et un champ de vision de 10° conformément aux JIS-K-7361 et JIS-K-7136.

**8.** Composition de résine selon l'une quelconque des revendications 1 à 7, comprenant en outre au moins un parmi un antioxydant et un agent de démoulage.

**9.** Article mis en forme formé à partir de la composition de résine selon l'une quelconque des revendications 1 à 8.

**10.** Article mis en forme selon la revendication 9, dans lequel l'article mis en forme est un film.

**11.** Article mis en forme selon la revendication 9 ou la revendication 10, dans lequel l'article mis en forme est destiné à un capteur d'écran tactile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 64043558 A
- JP 2018154819 A
- JP 2018090677 A
- JP 2018188496 A
- JP 2017031313 A